# EUROPÄISCHE PATENTSCHRIFT

(11) **EP 3 456 582 B1**
(45) Veröffentlichungstag und Bekanntmachung des Hinweises auf die Patenterteilung: **02.12.2020**
(21) Anmeldenummer: 18193565.1
(22) Anmeldetag: 10.09.2018
(51) Int. Cl.: B60N 2/56

(54) **KLIMASITZ**
CLIMATE-CONTROLLED SEAT
SIÈGE CLIMATISÉ

(30) Priorität: 19.09.2017 DE 102017216596
(43) Veröffentlichungstag der Anmeldung: 20.03.2019
(73) Patentinhaber: Sitech Sitztechnik GmbH, 38442 Wolfsburg (DE)
(72) Erfinder: Stahl, Christine, 38542 Leiferde (DE)
(74) Vertreter: Gulde & Partner

(56) Entgegenhaltungen:
- EP-A2- 1 064 905
- DE-T5-112014 005 563
- DE-U1-202010 009 752
- FR-A1- 3 036 932
- JP-A- 2006 223 836

## Beschreibung

Die Erfindung betrifft einen Klimasitz umfassend mindestens ein Fluidverteilsystem zur Belüftung eines Sitzteils und/oder eines Rückenlehnenteils. Das Fluidverteilsystem umfasst in mindestens einem exponierten Bereich einen, in einem belasteten Zustand gegenüber einem unbelasteten Zustand des Fluidverteilsystems querschnittsveränderlichen Fluidverteilkanal. Der Fluidverteilkanal weist mindestens eine Belüftungsöffnung in einer Sitzfläche des Sitzteiles und/oder einer Anlehnfläche des Rückenlehnenteils auf.

Die Druckschrift DE 21 36 947 A offenbart einen gepolsterten Fahrzeugsitz, der in der Sitzpolsterung und/oder in der Rückenlehnenpolsterung verteilt angeordnete Hohlräume aufweist, die auf gegenüberliegenden Seiten Öffnungen aufweisen und dort mit Ventilen oder Drosselstellen versehen sind, wobei diese Ventile oder Drosselstellen derart ausgebildet sind, dass bei auf den Fahrzeugsitz ausgeübten Schwingbewegungen eine Luftzirkulation durch die Hohlräume hindurch in Richtung auf die Sitz- beziehungsweise Anlehnfläche entsteht. Vorgesehen ist insbesondere, dass an den Lufteinlassöffnungen der Hohlräume Klappenventile und an den Auslassöffnungen Drosselstellen vorgesehen sind.

Die Druckschrift DE 10 2015 010 661 A1 beschreibt ein Belüftungssystem für eine Sitzanlage eines Kraftfahrzeuges, bei welchem jeweilige Polster eines Sitzteils und eines Lehnenteils mittels jeweiliger Belüftungseinrichtungen belüftbar sind. Das Belüftungssystem umfasst ferner eine Regeleinrichtung zur Steuerung des Belüftungssystems. Vorgesehen ist, dass die Belüftungseinrichtungen des Sitzteils und des Lehnenteils mittels der Regeleinrichtung separat regelbar sind. Außerdem beschreibt die Druckschrift eine Trennung der Regelung der Belüftung des Sitzteils und des Lehnenteils mittels einer entsprechenden Auslegung von Bedieneinheit, Regeleinrichtung und Kontaktierung der Lüfter. Der zur Belüftung dienende und durch die Lüfter erzeugte Luftstrom lässt sich dabei elektrisch beziehungsweise elektronisch gesteuert über die Drehzahl der Lüfter regulieren. Es wird ferner vorgeschlagen, dass durch eine weitere Differenzierung der luftführenden Kanäle auch mehrere unabhängige Belüftungszonen in Bereichen mit unterschiedlichen Anforderungsprofilen und unterschiedlichen typischen Mikroklimabedingungen realisiert werden können.

Die Druckschrift FR 3 036 932 A1 offenbart einen Klimasitz gemäß dem Stand der Technik.

Der Erfindung liegt die Aufgabe zugrunde, einen verbesserten klimatisierten Fahrzeugsitz zu schaffen, dessen Klimafunktion prozesssicher steuerbar ist und dessen Klimafunktion individueller auf die Komfortwünsche, der auf dem Fahrzeugsitz aufsitzenden Person einstellbar ist.

Ausgangspunkt der Erfindung ist ein Klimasitz umfassend mindestens ein Fluidverteilsystem zur Belüftung eines Sitzteils und/oder eines Rückenlehnenteils. Das Fluidverteilsystem umfasst in mindestens einem exponierten Bereich einen, in einem belasteten Zustand gegenüber einem unbelasteten Zustand des Fluidverteilsystems querschnittsveränderlichen Fluidverteilkanal. Der Fluidverteilkanal weist mindestens eine Belüftungsöffnung in einer Sitzfläche des Sitzteiles und/oder einer Anlehnfläche des Rückenlehnenteils auf.

Erfindungsgemäß ist vorgesehen, dass in dem mindestens einen Fluidverteilkanal mindestens ein den Querschnitt des sich im belasteten Zustand befindenden Fluidverteilkanals aufrechterhaltendes Element angeordnet ist.

In vorteilhafter Weise sind somit Fluidverteilkanäle, die in elastischen Polsterteilen ausgebildet sind, durch Anordnung des mindestens einen den Querschnitt des Fluidverteilkanal aufrechterhaltenden Elementes stabilisierbar. Die Polsterteile sind aus Komfortgründen elastisch ausgebildet und zumeist Schaumteile, wodurch die in den Schaum integrierten Fluidverteilkanäle bei einer auf die Fluidverteilkanäle wirkenden Kraft ihren Querschnitt verändert. Dabei treten in bestimmten Bereichen größere Kräfte auf, in denen in vorteilhafter Weise die querschnittserhaltenden Elemente angeordnet werden. Dadurch verändert sich der Querschnitt im belasteten Zustand des Polsterteiles nicht, so dass sich in vorteilhafter Weise vorberechnete Volumenströme, die über die Belüftungsöffnungen zu der Sitzfläche des Sitzteiles und/oder zu der Anlehnfläche des Rückenlehnenteils geführt werden sollen, nicht in Abhängigkeit des Belastungszustandes des Polsterteiles verändern.

Mithin ist die Aufgabe erfüllt, dass die Prozesssicherheit des Klimasitzes erhöht ist. Mit anderen Worten, durch die Sicherstellung eines sich auch im Belastungszustand nicht verändernden Querschnittes wird auch bei einer hohen Belastung die Verteilung des Fluids über das aus zumeist mehreren Fluidverteilkanälen bestehende Fluidverteilsystem im Sitzteil und/oder im Rückenlehnenteil sichergestellt.

In bevorzugter Ausgestaltung der Erfindung ist vorgesehen, dass die Sitzfläche des Sitzteiles die Seitenwangenflächen der Seitenwangen des Sitzteiles und die Anlehnfläche des Rückenlehnenteiles die Seitenwangenflächen der Seitenwangen des Rückenlehnenteiles umfasst. In vorteilhafter Weise können die Vorteile der Erfindung somit nicht nur in der zu belüftenden Sitzfläche des Sitzteiles und/oder der zu belüftenden Anlehnfläche des Rückenlehnenteils wirksam werden, sondern durch die entsprechende Anordnung mindestens eines Fluidverteilkanals in der jeweiligen Seitenwange kann die Klimatisierung prozesssicherer gestaltet werden.

Bevorzugt ist vorgesehen, dass das mindestens eine den Querschnitt aufrechterhaltende Element ein die Wandungen des mindestens einen Fluidverteilkanals stützendes und versteifendes Stütz-/Versteifungselement ist.

Das Element ist zumindest in mindestens einem exponierten Bereich des mindestens einen Fluidverteilkanals angeordnet.

Der mindestens eine exponierte Bereich ist durch Querschnittsveränderungen definiert, die in dem belasteten Zustand des Sitzteils und/oder des Rückenlehnenteils erzeugt werden. Um nicht alle Fluidverteilkanäle über ihre gesamte Länge stützen beziehungsweise versteifen zu müssen, werden erfindungsgemäß die exponierten Bereiche ermittelt, in denen dann mindestens ein entsprechendes Stütz-/Versteifungselement angeordnet wird, welches einen der entsprechenden Belastung nicht elastischen Korpus aufweist.

Durch den nicht elastischen Korpus des Elementes ist sichergestellt, dass der Querschnitt des mindestens einen Fluidverteilkanals zumindest in dem mindestens einen exponierten Bereich in einfacher Weise aufrechterhalten werden kann.

Erfindungsgemäß ist vorgesehen, dass das mindestens eine den Querschnitt des mindestens einen Fluidverteilkanals aufrechterhaltende Stütz-/Versteifungselement eine Armatur/ein Ventil ist, die/das neben der den Querschnitt des mindestens einen Fluidverteilkanals erhaltenden Funktion eine Steuer- beziehungsweise Regelfunktion eines durch den mindestens einen Fluidverteilkanal strömenden Volumenstromes eines Fluids umfasst.

Somit wird in vorteilhafter Weise der Effekt erreicht, dass nicht nur der Querschnitt aufrechterhalten wird, sondern dass gleichzeitig durch das jeweilige Element Einfluss auf den Fluidverteilkanal durch den oder die Fluidverteilkanäle genommen werden kann.

In verschiedenen Ausführungsvarianten ist bevorzugt vorgesehen, dass die Armatur/das Ventil eine Steuer- beziehungsweise Regelfunktion des Volumenstroms des Fluids innerhalb des mindestens einen Fluidverteilkanals aufweist, die eine Strömung des Fluids in mindestens einer Strömungsrichtung oder in beide Strömungsrichtungen in entgegengesetzter Strömungsrichtung zulässt.

In vorteilhafter Weise kann je nach Ausgestaltung der Armatur ein Saug- und/oder Blasbetrieb zur Belüftung des Sitzteiles und/oder des Rückenlehnenteiles realisiert werden, wie in der Beschreibung näher erläutert ist.

In verschiedenen Ausführungsformen ist außerdem bevorzugt vorgesehen, dass die Armatur einen Auf-Zu-Mechanismus zur Umsetzung einer Auf-Zu-Funktion oder einen Steuermechanismus zur Umsetzung einer stufenweisen oder stufenlosen Steuerfunktion oder einen Regelmechanismus zur Umsetzung einer stufenweisen oder stufenlosen Regelcharakteristik aufweist. In vorteilhafter Weise kann die Klimafunktion je nach dem gewünschten Komfort gemäß den genannten Ausführungsformen ausgestaltet werden.

Dabei ist in jeder der genannten Ausführungsvarianten und Ausführungsformen in bevorzugter Ausgestaltung der Erfindung vorgesehen, dass die Armatur fremdgesteuert ist, insbesondere eine elektrisch angesteuerte Klappe oder ein elektrisch angesteuertes Ventil ist. Damit komfortabel auf die Klimafunktion Einfluss genommen werden kann, ist in vorteilhafter Weise vorgesehen, dass die mindestens eine Armatur elektrisch ansteuerbar ist.

Alternativ dazu ist in jeder der genannten Ausführungsvarianten in bevorzugter Ausgestaltung der Erfindung vorgesehen, dass die Armatur eigengesteuert ist, insbesondere eine Venenklappe ist. Bei dieser einfacheren Ausgestaltung kann auf eine elektrische Ansteuerung verzichtet werden, da eine Armatur die funktionell wie eine Venenklappe arbeitet, nicht fremd angesteuert werden muss, worin der wesentliche Vorteil dieser alternativen Ausgestaltung zu sehen ist.

Der erfindungsgemäße Klimasitz zeichnet sich ferner dadurch aus, dass dem Klimasitz eine Steuereinrichtung zugeordnet ist, die einen computerlesbaren Programmalgorithmus aufweist, mittels dem die mindestens eine Armatur in dem mindestens einen Fluidverteilkanal ansteuerbar ist, wobei in der Steuereinrichtung ferner gegebenenfalls erforderliche Kennfelder gespeichert sind.

Zudem weist die Steuereinrichtung des Klimasitzes bevorzugt eine Schnittstelle auf, über die mittels einer Anwendungssoftware Einfluss auf den computerlesbaren Programmalgorithmus beziehungsweise die gegebenenfalls erforderlichen Kennfelder Einfluss genommen wird, wobei die Anwendungssoftware auf einem mobilen Endgerät, insbesondere einem Smartphone oder einem Tablet gespeichert ist, wobei die Schnittstelle kabellos oder kabelgebunden ausgebildet ist. In vorteilhafter Weise kann somit mittels der Anwendungssoftware individuell für eine Person und/oder individuell für verschiedene Personen ein Profil zur Klimatisierung hinterlegt und verändert werden. Hinterlegte Profile können mithilfe der Anwendungssoftware in den mobilen Endgeräten auch problemlos von einer Person auf eine andere Person oder von Fahrzeug zu Fahrzeug übertragen werden. Dabei besteht insbesondere in vorteilhafter Weise auch die Möglichkeit, verschiedene Klimabereiche im Sitzteil und/oder im Rückenlehnenteil individuell zu hinterlegen beziehungsweise zu verändern, wie in der Beschreibung noch näher erläutert ist.

Schließlich ist bevorzugt vorgesehen, dass das Sitzteil und/oder das Rückenlehnenteil bezüglich der Sitzfläche des Sitzteils oder bezüglich der Anlehnfläche des Rückenlehnenteils mindestens einen klimatisierten Bereich oder mehrere klimatisierte Bereiche aufweist, in dem oder in denen das mindestens eine den Querschnitt des mindestens einen den Fluidkanal stützende Stütz-/Versteifungselement angeordnet ist.

Der erfindungsgemäße Klimasitz wird nachfolgend anhand der zugehörigen Zeichnungen in einem Ausführungsbeispiel erläutert. Es zeigen:
- Figur 1A: einen Schnitt durch ein herkömmliches Polsterteil in einem unbelasteten Zustand;
- Figur 1B: der Schnitt durch das herkömmliche Polsterteil gemäß Figur 1A in einem belasteten Zustand;
- Figur 2A: einen erfindungsgemäßen, klimatisierbaren Fahrzeugsitz [Klimasitz] mit mehreren klimatisierbaren Bereichen je Polsterteil;
- Figur 2B: einen erfindungsgemäßen, klimatisierbaren Fahrzeugsitz mit einem klimatisierbaren Bereich je Polsterteil;
- Figur 3A: einen Schnitt durch das erfindungsgemäße Polsterteil mit einem Fluidverteilkanal, der eine den Fluidverteilkanal abstützenden Armatur in ihrer Geschlossenposition umfasst;
- Figur 3B: einen Schnitt durch das erfindungsgemäße Polsterteil mit dem Fluidverteilkanal, der eine den Fluidverteilkanal abstützenden Armatur in ihrer Offenposition umfasst.

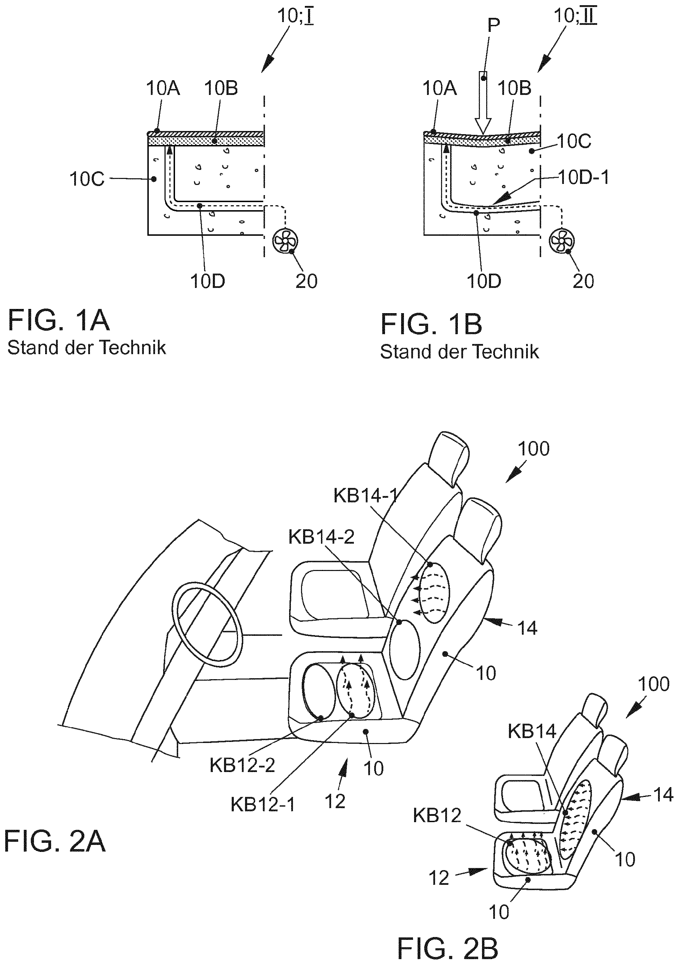

Figur 1A zeigt einen Schnitt durch ein herkömmliches Polsterteil 10 eines klimatisierbaren Fahrzeugsitzes, der nachfolgend Klimasitz 100 (vergleiche Figuren 2A und 2B) genannt wird, in einem unbelasteten Zustand I.

Ein Polsterteil 10 des Klimasitzes 100 weist zumindest ein Schaumteil 10C auf, das mit einem fluiddurchlässigen Bezug 10A versehen ist. Zumeist ist auf dem Schaumteil 10C eine fluiddurchlässige Kaschierung 10B zur besseren Druckverteilung des Gewichtes einer auf dem Klimasitz 100 aufsitzenden Person vorgesehen. Die fluiddurchlässige Kaschierung 10B sorgt ebenfalls dafür, dass die aufsitzende Person nicht direkt auf dem Schaumteil 10C aufsitzt, wodurch in dem Schaumteil 10C angeordnete Fluidverteilungskanäle beziehungsweise endseitige Öffnungen von Fluidverteilungskanälen von der Person unbemerkt bleiben.

In dem Schaumteil 10C ist erfindungsgemäß mindestens ein Fluidverteilkanal 10D angeordnet, der eine Belüftung der Sitzfläche eines Sitzteiles 12 oder einer Anlehnfläche eines Rückenlehnenteiles 14 ermöglicht.

Der mindestens eine Fluidverteilkanal 10D weist somit mindestens eine sitzteilseitige beziehungsweise rückenlehnenseitige endseitige Belüftungsöffnung auf, die in der durch das Polsterteil 10 des Sitzteils 12 gebildeten Sitzfläche oder in der durch das Polsterteil 10 des Rückenlehnenteils 14 gebildeten Anlehnfläche angeordnet ist.

Zudem weist der Fluidverteilkanal 10D mindestens eine weitere Zuführöffnung am anderen Ende des Fluidverteilkanals 10D auf über die dem mindestens einen Fluidverteilkanal 10D Fluid zugeführt wird.

Das über die mindestens eine Zuführöffnung zuführbare Fluid, insbesondere Luft wird von einem Lüfter 20 erzeugt, der den mindestens einen Fluidverteilkanal 10D mit Luft versorgt.

Dabei kann es sich wie bereits in der Druckschrift DE 10 2015 010 661 A1 offenbart ist, um einen Axial- oder Radiallüfter handeln, der das Fluid, insbesondere die Luft zu der mindestens einen endseitigen Belüftungsöffnung bläst (Blasbetrieb) oder von der mindestens einen Belüftungsöffnung (Saugbetrieb) absaugt.

Gemäß dem Schnitt in Figur 1B tritt in der Praxis durch die Gewichtskraft der aufsitzenden Person ein belasteter Zustand II ein, die durch den Pfeil P gekennzeichnet ist, wobei dadurch der Effekt auftritt, dass der Strömungsquerschnitt des mindestens einen Fluidverteilkanals 10D in mindestens einem Bereich 10D-1 verändert, insbesondere komprimiert wird.

Vor allem die Bereiche 10D-1 in denen der Strömungsquerschnitt derart verringert wird, so dass die Luft nicht ungehindert durch den Fluidverteilkanal 10D strömen kann, sind unerwünscht.

Insbesondere durch Strömungsquerschnittsverringerungen wird nämlich die gewünschte Klimafunktion eingeschränkt, da sich die Druckverhältnisse und die Volumenstromverhältnisse an der mindestens einen Belüftungsöffnung in unerwünschter Weise ändern.

Insbesondere bei Ausgestaltung des Klimasitzes 100 mit einem Fluidverteilsystem mit mehreren Fluidverteilkanälen 10D und/oder mehreren Belüftungsöffnungen wirkt sich eine Strömungsquerschnittverringerung eines Fluidverteilkanals 10D besonders nachteilig aus, da die Luft über andere nicht querschnittverringerte Fluidverteilkanäle 10D ein- oder ausströmt, deren Luftwiderstand geringer ist, so dass die Luftverteilung ungleichmäßig wird, wodurch der Klimakomfort des Klimasitzes 100 sinkt.

In Figur 1B ist stellvertretend für alle möglichen Veränderungen des Strömungsquerschnitts in dem mindestens einen Fluidverteilkanal 10D eines Fluidverteilsystems ein horizontaler Komprimierungsbereich 10D-1 in einem Fluidverteilkanal 10D dargestellt.

Veränderungen des Strömungsquerschnitts können ebenfalls in einem vertikalen Bereich oder in schräg verlaufenden Bereichen des mindestens einen Fluidverteilkanals 10D des Fluidverteilsystems im Sitzteil 12 und/oder dem Rückenlehnenteil 14 auftreten, sobald eine Person auf dem Fahrzeugsitz 100 Platz nimmt.

Die Erfindung sieht, vor die Veränderungen des Strömungsquerschnitts in dem mindestens einen Fluidverteilkanal 10D eines Fluidverteilsystems zu verhindern.

Bisher wurden derart vorgegangen, dass der Sitzschaum des Schaumteils 10C dahingehend optimiert wurde, dass die Veränderungen des Strömungsquerschnitts im Belastungsfall II möglichst gering sind.

Diese Vorgehensweise wird grundsätzlich beibehalten, jedoch wird darüber hinaus erfindungsgemäß vorgeschlagen, dass in mindestens einem hinsichtlich der unerwünschten Veränderungen des Strömungsquerschnitts exponierten Bereich des mindestens einen Fluidverteilkanals 10D mindestens ein Stütz- beziehungsweise Versteifungselement zum Offenhalten beziehungsweise zum Aufrechterhalten des Querschnitts angeordnet wird.

Erfindungsgemäß weist das mindestens eine Stütz- beziehungsweise Versteifungselement einen Korpus auf, dessen Geometrie sich in einem Belastungsfall nicht ändert.

In bevorzugter Ausgestaltung der Erfindung ist insbesondere vorgesehen, dass das mindestens eine Stütz- beziehungsweise Versteifungselement eine Armatur 10E ist, die zwei Funktionen aufweist, nämlich die Stützfunktion des mindestens einen Fluidverteilkanals 10D als auch die Steuer- beziehungsweise Regelfunktion des Volumenstroms innerhalb des mindestens einen Fluidverteilkanals 10D.

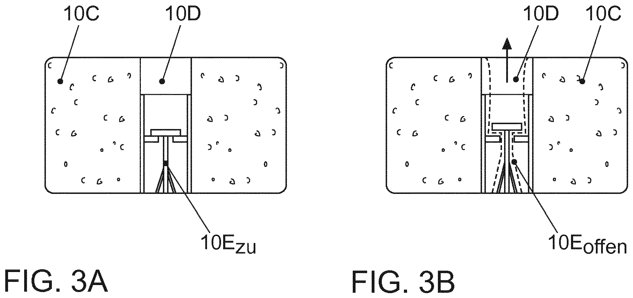

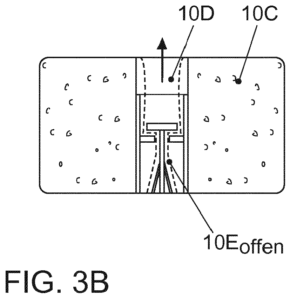

Dabei ist gemäß den Figuren 3A und 3B vorgesehen, dass die mindestens eine Armatur 10E zumindest eine Auf-Zu-Funktion aufweist. Die Armatur 10E ist somit beispielsweise ein Ventil, insbesondere ein Tellerventil, welches bevorzugt für einen Blasbetrieb zum Einsatz kommt, bei dem Luft zu der mindestens einen endseitigen Belüftungsöffnung geblasen wird.

Die Figur 3A zeigt beispielhaft das Tellerventil 10E in einem geschlossenen Zustand 10E_{ZU}, während Figur 3B das Tellerventil 10E in einem offenen Zustand 10E_{OFFEN} zeigt, in dem die Luft in Strömungsrichtung gemäß dem ohne Bezugszeichen dargestellten Strömungspfeil zu der mindestens einen Belüftungsöffnung geblasen wird.

Erfindungsgemäß wird durch die Figuren 3A und 3B verdeutlicht, dass der Einbau des Tellerventils 10E in einem vertikalen Bereich des mindestens einen Fluidverteilkanals 10D möglich ist, der durch den nicht elastischen Korpus des Tellerventils 10E in vorteilhafter Weise gleichzeitig versteift wird, so dass im Belastungsfall keine den Querschnitt verengenden Veränderungen auftreten.

Es ist somit erfindungsgemäß vorgesehen, Tellerventile mit verstell- und/oder drehbaren Ventiltellern vorzusehen oder andere Armaturen mit vergleichbaren Funktionen zu verwenden, die eine stufenweise oder stufenlose Einregulierung der gewünschten Luftmenge ermöglichen.

Erfindungsgemäß ist vorgesehen, dass die mindestens eine Armatur 10E angesteuert, insbesondere elektrisch angesteuert wird, so dass eine Offenposition 10E_{OFFEN} oder eine Geschlossenposition 10E_{ZU} oder eine stufenweise oder stufenlose Einregulierung der gewünschten Luftmenge über ein dem Klimasitz 100 zugeordnetes Steuerungs- oder ein Regelkonzept möglich ist. Zu diesem Zweck umfasst der Klimasitz 100 eine Steuereinrichtung, in der ein computerlesbarer Programmalgorithmus zur Ausführung des Verfahrens zur Ansteuerung beziehungsweise Regelung der mindestens einen Armatur 10E und gegebenenfalls erforderliche Kennfelder gespeichert sind. Es versteht sich, dass insbesondere die Anordnung mehrerer Armaturen 10E eines Fluidverteilsystems im Sitzteil 12 und/oder dem Rückenlehnenteil 14 über eine solche insbesondere dem Klimasitz zugeordnete Steuereinrichtung gewährleistet werden kann. Insofern ist der Klimasitz 100 dazu eingerichtet, ein Verfahren zur Ansteuerung beziehungsweise Regelung der mindestens einen Armatur 10E auszuführen.

In einer bevorzugten Variante kann vom Nutzer auf das Verfahren zur Ansteuerung beziehungsweise Regelung der mindestens einen Armatur 10E über eine Anwendungssoftware (App) außerhalb der kraftfahrzeugseitigen Steuereinrichtung Einfluss genommen werden. Insofern weist die kraftfahrzeugseitige Steuereinrichtung eine Schnittstelle auf, die für Mobilgeräte beziehungsweise mobile Betriebssysteme zur Verfügung steht, so dass über die auf einem mobilen Endgerät angeordnete Anwendungssoftware auf die kraftfahrzeugseitige Steuereinrichtung Einfluss genommen werden kann, wobei als Mobilgeräte insbesondere Smartphones und Tablets angesehen werden, die mit der kraftfahrzeugseitigen Steuereinrichtung kommunizieren.

In einer Basisvariante werden Armaturen 10E vorgesehen, die in der Art einer Venenklappe als Rückschlagventil ausgebildet sind und funktionieren. Ein in dem mindestens einen Fluidverteilkanal 10F angeordnete Venenklappe benötigen in vorteilhafter Weise keine externe Ansteuerung und sorgt für die Stützfunktion und im Betrieb (Saugbetrieb oder Blasbetrieb) je nach Einbaurichtung für die automatische Öffnung in einer der Strömungsrichtungen.

In der Figur 2A ist ein erfindungsgemäß klimatisierter Fahrzeugsitz 100 mit mehreren klimatisierbaren Teilbereichen KB12-1, KB12-2 im Polsterteil des Sitzteiles 12 und mehreren klimatisierbaren Teilbereichen KB14-1, KB14-2 im Polsterteil des Rückenlehnenteils 14 dargestellt.

Es versteht sich, dass erfindungsgemäß über das Ausführungsbeispiel hinaus, mehr als die zwei im Polsterteil des Sitzteiles 12 und/oder im Polsterteil des Rückenlehnenteils 14 angeordneten klimatisierbaren Teilbereiche ausbildbar sind.

Es wird deutlich, dass mittels der über die Anwendungssoftware (App) umprogrammierbare bereits beschriebene kraftfahrzeugseitige Steuereinrichtung sehr individuell einstellbar nur die Belüftungsöffnungen in den klimatisierbaren Teilbereichen KB12-1, KB14-1 mit einem Fluid versorgt werden, indem die dem mindestens einen Fluidverteilkanal 10D zugeordnete/n Armatur/en 10E zumindest teilweise geöffnet wird/werden. Die dem mindestens einen Fluidverteilkanal 10D der anderen klimatisierbaren Teilbereiche KB12-2, KB14-2 zugeordnete/n Armatur/en 10E sind entsprechend geschlossen.

In der Figur 2B ist ein erfindungsgemäßer Klimasitz 100 dargestellt, bei dem auf die klimatisierbaren Teilbereiche KB12-1, KB12-2, KB14-1, KB14-2 verzichtet wurde, so dass das Sitzteil 12 den klimatisierten Bereich KB12 und das Rückenlehnenteil 14 den klimatisierten Bereich KB14 aufweist, wobei gemäß der beispielhaften Darstellung die Belüftungsöffnungen in der gesten Sitzfläche des Sitzteiles 12 oder der gesamten Anlehnfläche des Rückenlehnenteiles 14 bevorzugt gleichmäßig verteilt angeordnet sind.

Gemäß der Erfindung ist/sind dem Sitzteil 12 und/oder dem Rückenlehnenteil 14 mindestens ein Fluidverteilkanal 10D zugeordnet, der mindestens ein Stütz- beziehungsweise Versteifungselement aufweist, der in bevorzugter Ausgestaltung der Erfindung eine der beschriebenen Armatur 10E ist.

### Bezugszeichenliste

- 10: Polsterteil
- 10A: Bezug
- 10B: Kaschierung
- 10C: Schaumteil
- 10D: Fluidverteilkanal
- 10D-1: Bereich
- 10E: Stütz-/Versteifungselement/Armatur/Ventil
- 10E_{zu}: geschlossener Zustand
- 10E_{offen}: offener Zustand
- 12: Sitzteil
- 14: Rückenlehnenteil
- 20: Lüfter
- 100: Klimasitz
- KB12: klimatisierter Bereich
- KB12-1: klimatisierter Teilbereich
- KB12-2: klimatisierter Teilbereich
- KB14: klimatisierter Bereich
- KB14-1: klimatisierter Teilbereich
- KB14-2: klimatisierter Teilbereich
- I: unbelasteter Zustand
- II: belasteter Zustand
- P: Belastungspfeil

## Patentansprüche

1. Klimasitz (100) umfassend mindestens ein Fluidverteilsystem zur Belüftung eines Sitzteils (12) und/oder eines Rückenlehnenteils (14), wobei das Fluidverteilsystem in mindestens einem exponierten Bereich einen, in einem belasteten Zustand (II) gegenüber einem unbelasteten Zustand (I) des Fluidverteilsystems querschnittsveränderlichen Fluidverteilkanal (10D) umfasst, der mindestens eine Belüftungsöffnung in einer Sitzfläche des Sitzteiles (12) und/oder einer Anlehnfläche des Rückenlehnenteils (14) aufweist, wobei in dem mindestens einen Fluidverteilkanal (10D) mindestens ein den Querschnitt des sich im belasteten Zustand (II) befindenden Fluidverteilkanals (10E) aufrechterhaltendes Element (10E) angeordnet ist, **dadurch gekennzeichnet, dass** das mindestens eine den Querschnitt des mindestens einen Fluidverteilkanals (10D) aufrechterhaltende Stütz-/Versteifungselement (10E) eine Armatur mit einem Korpus ist, dessen Geometrie sich im Belastungsfall nicht ändert, wobei die Armatur neben der den Querschnitt des mindestens einen Fluidverteilkanals (10D) erhaltenden Funktion eine Steuer- beziehungsweise Regelfunktion eines durch den mindestens einen Fluidverteilkanal (10D) strömenden Volumenstromes eines Fluids umfasst.

2. Klimasitz (100) nach Anspruch 1, **dadurch gekennzeichnet, dass** die Sitzfläche des Sitzteiles (12) die Seitenwangenflächen der Seitenwangen des Sitzteils (12) und die Anlehnfläche des Rückenlehnenteils (14) die Seitenwangenflächen der Seitenwangen des Rückenlehnenteils (14) umfasst.

3. Klimasitz (100) nach Anspruch 1 oder 2, **dadurch gekennzeichnet, dass** das mindestens eine den Querschnitt aufrechterhaltende Element (10) ein die Wandungen des mindestens einen Fluidverteilkanals stützenden und versteifendes Stütz-/Versteifungselement (10E) ist, welches zumindest in dem exponierten Bereich des mindestens einen Fluidverteilkanals (10D) angeordnet ist, wobei der exponierte Bereich durch Querschnittsveränderungen definiert ist, die in dem belasteten Zustand (II) des Sitzteiles (12) und/oder des Rückenlehnenteiles (14) erzeugt werden.

4. Klimasitz (100) nach Anspruch 1, **dadurch gekennzeichnet, dass** die Armatur (10E) die Steuer- beziehungsweise Regelfunktion des Volumenstroms des Fluids aufweist, die eine Strömung des Fluids in mindestens einer Strömungsrichtung oder in beide Strömungsrichtungen in entgegengesetzter Strömungsrichtung zulässt.

5. Klimasitz (100) nach Anspruch 1, **dadurch gekennzeichnet, dass** die Armatur (10E) einen Auf-Zu-Mechanismus zur Umsetzung einer Auf-Zu-Funktion oder einen Steuermechanismus zur Umsetzung einer stufenweisen oder stufenlosen Steuerfunktion oder einen Regelmechanismus zur Umsetzung einer stufenweisen oder stufenlosen Regelcharakteristik aufweist.

6. Klimasitz (100) nach mindestens einem der Ansprüche 1 oder 4 oder 5, **dadurch gekennzeichnet, dass** die Armatur (10E) fremdgesteuert ist, eine elektrisch angesteuerte Klappe oder ein elektrisch angesteuertes Ventil ist.

7. Klimasitz (100) nach mindestens einem der Ansprüche 1 oder 4 oder 5, **dadurch gekennzeichnet, dass** die Armatur (10E) eigengesteuert ist, eine Venenklappe ist.

8. Klimasitz (100) nach Anspruch 6, **dadurch gekennzeichnet, dass** dem Klimasitz (100) eine Steuereinrichtung zugeordnet ist, die einen computerlesbaren Programmalgorithmus aufweist, mittels dem die mindestens eine Armatur (10E) in dem mindestens einen Fluidverteilkanal (10D) ansteuerbar ist, wobei in der Steuereinrichtung ferner gegebenenfalls erforderliche Kennfelder gespeichert sind.

9. Klimasitz (100) nach Anspruch 8, **dadurch gekennzeichnet, dass** die Steuereinrichtung eine Schnittstelle aufweist, über die mittels einer Anwendungssoftware Einfluss auf den computerlesbaren Programmalgorithmus beziehungsweise die gegebenenfalls erforderlichen Kennfelder Einfluss genommen wird, wobei die Anwendungssoftware auf einem mobilen Endgerät, einem Smartphone oder einem Tablet gespeichert ist, wobei die Schnittstelle kabellos oder kabelgebunden ausgebildet ist.

10. Klimasitz (100) nach Anspruch 1, **dadurch gekennzeichnet, dass** das Sitzteil (12) und/oder das Rückenlehnenteil (14) bezüglich der Sitzfläche des Sitzteils (12) oder bezüglich der Anlehnfläche des Rückenlehnenteils (14) mindestens einen klimatisierten Bereich (KB12, KB14) oder mehrere klimatisierte Bereiche (KB12-1, KB12-2; KB14-1, KB14-2) aufweist, in dem oder in denen das mindestens eine den Querschnitt des mindestens einen den Fluidkanal (10D) stützende Stütz-/Versteifungselement (10E) nach einem der vorhergehenden Ansprüche angeordnet ist.

## Claims

1. Air-conditioned seat (100) comprising at least one fluid distribution system for venting a sitting component (12) and/or a backrest component (14), wherein the fluid distribution system comprises at least one exposed region, a fluid distribution duct (10D) which in an unloaded state (II) has a variable cross section in comparison with an unloaded state (I) of the fluid distribution system and has at least one venting opening in a sitting face of the sitting component (12) and/or a leaning face of the backrest component (14), wherein at least one element (10E) which maintains the cross section of the fluid distribution duct (10E) which is in the loaded state (II) is arranged in the at least one fluid distribution duct (10D),
**characterized in that**
the at least one supporting/reinforcement element (10E) which maintains the cross section of the at least one fluid distribution duct (10D) is a fitting with a body whose geometry does not change in the case of loading, wherein the fitting comprises, in addition to the function which maintains the cross section of the at least one fluid distribution duct (10D), an open-loop or closed-loop control function of a volume flow of a fluid which flows through the at least one fluid distribution duct (10D).

2. Air-conditioned seat (100) according to Claim 1, **characterized in that** the sitting face of the sitting component (12) comprises the side element faces of the side elements of the sitting component (12), and the leaning face of the backrest component (14) comprises the side element faces of the side elements of the backrest component (14).

3. Air-conditioned seat (100) according to Claim 1 or 2, **characterized in that** the at least one element (10) which maintains the cross section is a supporting/reinforcement element (10E) which supports and reinforces the walls of the at least one fluid distribution duct and which is arranged at least in the exposed region of the at least one fluid distribution duct (10D), wherein the exposed region is defined by changes in cross section which are generated in the loaded state (II) of the sitting component (12) and/or of the backrest component (14).

4. Air-conditioned seat (100) according to Claim 1, **characterized in that** the fitting (10E) has the open-loop or closed-loop control function of the volume flow of the fluid which permits the fluid to flow in at least one direction of flow or in both directions of flow in opposite directions of flow.

5. Air-conditioned seat (100) according to Claim 1, **characterized in that** the fitting (10E) has an opening and closing mechanism for implementing an opening and closing function or a control mechanism for implementing an incremental or infinitely variable open-loop control function or a closed-loop control mechanism for implementing an incremental or infinitely variable closed-loop control characteristic.

6. Air-conditioned seat (100) according to at least one of Claims 1 or 4 or 5, **characterized in that** the fitting (10E) is externally controlled, is an electrically actuated flap or is an electrically actuated valve.

7. Air-conditioned seat (100) according to at least one of Claims 1 or 4 or 5, **characterized in that** the fitting (10E) is controlled automatically and is a venous valve.

8. Air-conditioned seat (100) according to Claim 6, **characterized in that** the air-conditioned seat (100) is assigned a control device which has a computer-readable program algorithm by means of which the at least one fitting (10E) in the at least one fluid distribution duct (10D) can be actuated, wherein in addition characteristic diagrams which are possibly necessary are stored in the control device.

9. Air-conditioned seat (100) according to Claim 8, **characterized in that** the control device has an interface via which the computer-readable program algorithm is influenced by means of application software or the characteristic diagrams which are possibly necessary are influenced, wherein the application software is stored in a mobile terminal, a smartphone or a tablet, wherein the interface is embodied in a cableless or cable-bound fashion.

10. Air-conditioned seat (100) according to Claim 1, **characterized in that** the sitting component (12) and/or the backrest component (14) have/has, with respect to the sitting face of the sitting component (12) or with respect to leaning face of the backrest component (14), at least one air-conditioned region (KB12, KB14) or a plurality of air-conditioned regions (KB12-1, KB12-2; KB14-1, KB14-2) in which the at least one supporting/reinforcement element (10E) which supports the cross section of the at least one the fluid duct (10D), according to one of the preceding claims, is arranged.

## Revendications

1. Siège climatisé (100) comprenant au moins un système de distribution de fluide pour la ventilation d'une partie formant assise (12) et/ou d'une partie formant dossier (14), dans lequel le système de distribution de fluide comprend, dans au moins une zone exposée, un canal de distribution de fluide (10D) de section transversale variable dans un état chargé (II) par rapport à un état déchargé (I) du système de distribution de fluide, lequel canal comporte au moins une ouverture de ventilation dans une surface d'assise de la partie formant assise (12) et/ou une surface de dossier de la partie formant dossier (14), dans lequel au moins un élément (10E) maintenant la section transversale du canal de distribution de fluide (10E) à l'état chargé (II) est disposé dans ledit au moins un canal de distribution de fluide (10D),
**caractérisé en ce que** ledit au moins un élément de support/renforcement (10E) maintenant la section transversale dudit au moins un canal de distribution de fluide (10D) est une armature comportant un corps dont la géométrie ne change pas en présence d'une charge, dans lequel l'armature possède, outre la fonction de maintien de la section transversale dudit au moins un canal de distribution de fluide (10D), une fonction de commande ou de régulation d'un débit volumique d'un fluide s'écoulant à travers ledit au moins un canal de distribution de fluide (10D).

2. Siège climatisé (100) selon la revendication 1, **caractérisé en ce que** la surface d'assise de la partie formant assise (12) comprend les surfaces de paroi latérale des parois latérales de la partie formant assise (12) et **en ce que** la partie formant dossier (14) comprend les surfaces de paroi latérale des parois latérales de la partie formant dossier (14).

3. Siège climatisé (100) selon la revendication 1 ou 2, **caractérisé en ce que** ledit au moins un élément de maintien de section transversale (10) est un élément de support/renforcement (10E) qui supporte et raidit les parois dudit au moins un canal de distribution de fluide et qui est disposé au moins dans la zone exposée dudit au moins un canal de distribution de fluide (10D), dans lequel la zone exposée est définie par des modifications de section transversale qui sont générées à l'état chargé (II) de la partie formant assise (12) et/ou de la partie formant dossier (14).

4. Siège climatisé (100) selon la revendication 1, **caractérisé en ce que** l'armature (10E) possède la fonction de commande ou de régulation du débit volumique du fluide, qui permet un écoulement du fluide dans au moins une direction d'écoulement ou les deux directions d'écoulement, dans des directions d'écoulement opposées.

5. Siège climatisé (100) selon la revendication 1, **caractérisé en ce que** l'armature (10E) comporte un mécanisme d'activation-désactivation destiné à mettre en œuvre une fonction d'activation-désactivation ou un mécanisme de commande destiné à mettre en œuvre une fonction de commande pas à pas ou en continu, ou un mécanisme de commande destiné à mettre en œuvre une caractéristique de régulation pas à pas ou en continu.

6. Siège climatisé (100) selon au moins l'une des revendications 1 ou 4 ou 5, **caractérisé en ce que** l'armature (10E) est commandée de l'extérieur et est un clapet commandé électriquement ou une vanne commandée électriquement.

7. Siège climatisé (100) selon au moins l'une des revendications 1 ou 4 ou 5, **caractérisé en ce que** l'armature (10E) est auto-commandée et est une vanne veineuse.

8. Siège climatisé (100) selon la revendication 6, **caractérisé en ce que** le siège climatisé (100) est associé à un dispositif de commande qui possède un algorithme programmé lisible par ordinateur au moyen duquel ladite au moins une armature (10E) peut être commandée dans ledit au moins un canal de distribution de fluide (10D), dans lequel des diagrammes caractéristiques sont également stockés dans le dispositif de commande.

9. Siège climatisé (100) selon la revendication 8, **caractérisé en ce que** le dispositif de commande comporte une interface par le biais de laquelle une influence est exercée sur l'algorithme programmé lisible par ordinateur ou les diagrammes caractéristiques éventuellement nécessaires au moyen d'un logiciel d'application, dans lequel le logiciel d'application est stocké sur un appareil mobile, un smartphone ou une tablette, dans lequel l'interface est conçue pour être sans fil ou câblée.

10. Siège climatisé (100) selon la revendication 1, **caractérisé en ce que** la partie formant assise (12) et/ou la partie formant dossier (14) présente, par rapport à la surface d'assise de la partie formant assise (12) ou par rapport à la surface de dossier de la partie formant dossier (14), au moins une zone climatisée (KB12, KB14) ou plusieurs zones climatisées (KB12-1, KB12-2 ; KB14-1, KB14-2) dans laquelle ou dans lesquelles est disposé ledit au moins un élément de support/renforcement (10E) supportant la section transversale de l'au moins un le canal de fluide (10D) selon l'une des revendications précédentes.
